# DEMANDE DE BREVET EUROPEEN

(11) **EP 3 626 537 A1**
(43) Date de publication de la demande: **25.03.2020**
(21) Numéro de dépôt: 19194891.8
(22) Date de dépôt: 02.09.2019
(51) Int. Cl.: B60R 1/00, B60R 11/04

(54) **PROCÉDÉ ET SYSTÈME DE RÉTROVISION NUMÉRIQUE POUR UN VÉHICULE AUTOMOBILE**

(30) Priorité: 19.09.2018 FR 1858464
(71) Demandeur: PSA Automobiles SA, 78300 Poissy (FR)
(72) Inventeur: RIAT, JEAN CHRISTOPHE, 95870 BEZONS (FR); FEINGOLD, LAURENT, 91400 SACLAY (FR); VRINAT, DAVID, 92140 CLAMART (FR)

(57) **Abrégé**

L'invention se rapporte à un procédé de rétrovision numérique pour un véhicule (2) automobile comportant un hayon (20) et une caméra de rétrovision fixée au hayon (20), le procédé comportant les étapes suivantes :
- capter une image, ci-après image captée (120) d'une partie de l'environnement du véhicule au moyen de la caméra de rétrovision ;
- restituer une portion de l'image captée (120), ci-après image restituée (122), sur un écran de rétrovision ;
- effectuer une action corrective et/ou émettre un signal d'alerte si le hayon (20) est ouvert.

## Description

L'invention se rapporte au domaine des équipements et systèmes de vision équipant les véhicules automobiles. Plus précisément, l'invention concerne les systèmes de rétrovision intérieurs.

La législation impose, pour la plupart de véhicules automobiles, la présence de rétroviseurs. Par exemple, les voitures particulières doivent disposer au minimum d'un rétroviseur intérieur et, selon les cas, d'un ou deux rétroviseurs extérieurs. Les rétroviseurs doivent être composés de miroirs plans ou sphériques convexes. Le rétroviseur intérieur doit permettre au conducteur de voir, à travers la lunette arrière du véhicule, au moins une portion de route, centrée sur le plan longitudinal médian du véhicule, ayant une certaine largeur et s'étendant d'une certaine distance de l'arrière du véhicule à l'infini.

Une évolution récente de la législation permet désormais que le miroir rétroviseur intérieur soit remplacé par un système de rétrovision numérique, comportant une caméra située à l'arrière du véhicule et orientée vers l'arrière, et un dispositif pour l'affichage des images fournies par la caméra.

Un tel système peut toutefois présenter des défaillances lorsqu'il est monté sur un véhicule équipé d'un hayon. En effet, la caméra étant alors fixée sur le hayon, l'ouverture de celui-ci a pour effet de faire pivoter la caméra et donc de modifier son orientation, le champ de vision de la caméra étant alors affecté. Cette modification du champ de vision de la caméra est susceptible d'induire le conducteur en erreur. Or, il faut envisager que le véhicule puisse rouler avec le hayon ouvert, par exemple en cas de transport d'une charge longue.

Il existe donc un besoin de prévoir un système de rétrovision numérique qui puisse rester fiable en toutes circonstances, en particulier si le hayon du véhicule est ouvert.

L'invention a pour objet de répondre à ce besoin.

À cet effet, l'invention concerne un procédé de rétrovision numérique pour un véhicule automobile comportant un hayon et une caméra de rétrovision fixée au hayon, le procédé comportant les étapes suivantes :
- capter une image, ci-après image captée, d'une partie de l'environnement du véhicule au moyen de la caméra de rétrovision ;
- restituer une portion de l'image captée, ci-après image restituée, sur un écran de rétrovision ;
- effectuer une action corrective et/ou émettre un signal d'alerte si le hayon est ouvert.

Ainsi, le procédé conforme à l'invention permet de prendre en compte l'état ouvert ou fermé du hayon, afin d'éviter une restitution non conforme de l'environnement du véhicule lorsque le hayon est ouvert et modifie l'orientation de la caméra de rétrovision. Le procédé conforme à l'invention permet de corriger, éventuellement de manière automatique, cette restitution non conforme, et/ou d'avertir le conducteur de celle-ci.

Dans une réalisation, l'action corrective consiste en une modification de la portion de l'image captée qui est restituée.

Dans une réalisation, la modification de la portion de l'image captée est réalisée par modification d'un angle d'inclinaison de l'image restituée, ou angle de « tilt ».

Dans une réalisation, la modification de l'angle d'inclinaison de l'image restituée est réalisée en fonction de la position de l'horizon sur l'image restituée.

Dans une réalisation, le signal d'alerte est un signal lumineux et/ou un signal sonore et/ou un message d'alerte affiché sur l'écran de rétrovision.

Dans une réalisation, l'émission d'un signal d'alerte est couplée à l'arrêt de l'affichage de l'image restituée sur l'écran de rétrovision.

Dans une réalisation, le procédé comporte une étape de détection d'un phénomène vibratoire affectant l'image restituée, une action corrective telle que l'arrêt de l'affichage de l'image restituée pouvant être réalisée si un phénomène vibratoire correspondant à une configuration dans laquelle le hayon est ouvert est détecté.

L'invention concerne également un produit programme d'ordinateur comprenant des instructions qui, lorsque le programme est exécuté par un processeur, conduisent celui-ci à mettre en oeuvre les étapes du procédé tel que défini ci-dessus.

L'invention concerne également un système de rétrovision numérique pour la mise en oeuvre d'un procédé tel que défini ci-dessus, le système de rétrovision comportant un calculateur de rétrovision, une caméra de rétrovision, un écran de rétrovision et un capteur d'ouverture de coffre.

L'invention concerne également un véhicule automobile mettant en oeuvre un procédé tel que défini plus haut, et/ou comportant un système de rétrovision numérique conforme à celui défini ci-dessus.

La présente invention sera mieux comprise à la lecture de la description détaillée qui suit, faite en référence au dessins annexés, dans lesquels :
- la figure 1 représente un système de rétrovision numérique pour véhicule automobile configuré pour mettre en oeuvre un procédé conforme à l'invention ;
- la figure 2 représente un véhicule automobile équipé d'un système de rétrovision numérique conforme à l'invention ;
- la figure 3 est un schéma montrant le principe de modification de l'angle d'inclinaison de l'image restituée.

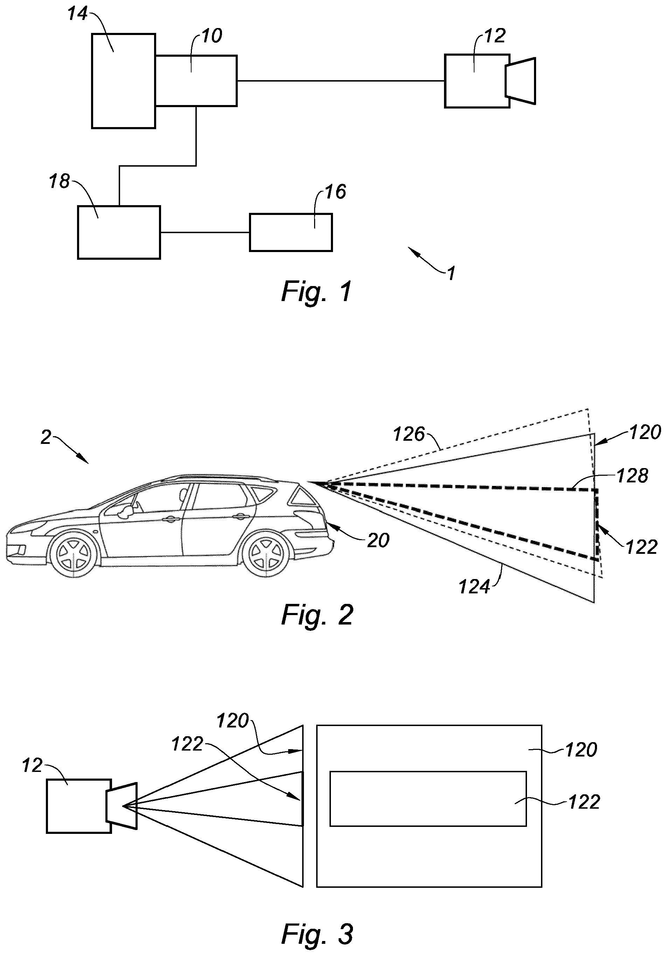

La figure 1 représente schématiquement un système de rétrovision numérique centrale conforme à l'invention. Le système de rétrovision numérique 1 comporte un calculateur de rétrovision 10, une caméra de rétrovision 12 et un écran de rétrovision 14. Le système de rétrovision numérique1 est notamment adapté à un véhicule automobile tel que le véhicule 2 de la figure 2, qui comporte un hayon 20 arrière. La caméra de rétrovision 12 est disposée de préférence en partie haute du hayon 20, soit à l'intérieur soit à l'extérieur du véhicule 2. L'écran de rétrovision 14 est disposé à l'intérieur de l'habitacle, soit à l'emplacement usuel du miroir rétroviseur intérieur, c'est-à-dire en position haute et centrale du pare-brise avant du véhicule, soit, de préférence, en zone centrale de la planche de bord, notamment dans une position avancée vers le pare-brise. Le système de rétrovision numérique 1 est configuré pour restituer, sur l'écran de rétrovision 14, les images captées par la caméra de rétrovision 12 et transmises par l'intermédiaire du calculateur de rétrovision 10. Conformément à l'invention, le calculateur de rétrovision 10 est relié à un capteur d'ouverture de coffre 16, dans l'exemple par l'intermédiaire d'un calculateur central 18 du véhicule.

Ainsi, lorsque le hayon 20 du véhicule 2 est ouvert, ou n'est pas correctement fermé, le système de rétrovision numérique 1 reçoit du capteur d'ouverture de coffre 16 une information selon laquelle le hayon 20 est ouvert.

Suite à la réception de cette information, le système de rétrovision numérique 1 émet un signal d'alerte à l'attention du conducteur et/ou effectue une action corrective.

Le signal d'alerte peut être un signal lumineux, et/ou un signal sonore, et/ou l'affichage d'un message d'alerte sur l'écran de rétrovision 14. L'émission d'un signal d'alerte, en particulier lorsqu'il s'agit d'un message d'alerte, peut être accompagné ou non de l'arrêt de la restitution de l'image captée par la caméra de rétrovision 12 sur l'écran de rétrovision 14.

Une action corrective consiste en la modification de l'image restituée sur l'écran de rétrovision 14, qui est une portion de l'image captée par la caméra de rétrovision 12. Cette modification peut par exemple consister en une modification de l'angle de « tilt », ou angle d'inclinaison de l'image restituée. Une telle modification est illustrée sur la figure 3, qui montre sur la partie gauche de la figure, le champ de vision de la caméra dans un plan vertical, et, sur la partie droite, l'image captée par la caméra. Comme visible sur la figure 3, le champ de vision de la caméra de rétrovision 12 permet d'obtenir une image captée 120, généralement au format 4/3 ou 16/9, qui est plus grande que l'image qui va être restituée sur l'écran de rétrovision 14. Ainsi l'image restituée 122 qui est affichée sur cet écran constitue une portion de l'image captée 120 par la caméra. Il est donc possible de modifier la position, notamment en hauteur, de cette portion d'image 122 qui est restituée, comme montré sur la figure 2.

Sur la figure 2 est repéré le champ de vision dans le plan vertical de la caméra de rétrovision 12 lorsque le coffre est fermé (référence 124), lorsque le coffre est ouvert d'un angle d'environ 10° (référence 126), et enfin la portion du champ de vision correspondant à la portion d'image restituée sur l'écran (référence 128). Comme visible sur la figure 2, lorsque le hayon du véhicule 2 est ouvert, le champ de vision de la caméra de rétrovision 12 se trouve décalé vers le haut par rapport au champ de vision normal (hayon fermé). Toutefois, la modification de l'angle de « tilt » permet de compenser ce décalage, en abaissant, au sein de l'image captée 120 par la caméra, la portion de cette image qui va être restituée au conducteur.

L'action corrective consistant à modifier l'angle d'inclinaison de l'image restituée 122 peut être effectuée automatiquement par le système de rétrovision numérique 1, par exemple par détection et compensation de la position de l'horizon au sein de l'image restituée 122 au conducteur. Dans ce cas, cette compensation sera effectuée en fonction de règles prédéterminées, par exemple une règle impliquant de maintenir la position de l'horizon à un niveau donné de l'image restituée (par exemple pour maintenir un rapport de 1 : 3 entre la portion de l'image restituée correspondant au ciel et la portion de l'image restituée correspondant au sol).

Alternativement, cette action de modification peut être réalisée par le conducteur. Le système est dans ce cas équipé d'une commande de réglage de l'angle de « tilt », et le système émet un signal d'alerte, notamment un message d'alerte, invitant le conducteur à effectuer une telle modification lorsque l'ouverture du hayon est détectée.

On pourra également prévoir de détecter, au moyen d'un algorithme de traitement de l'image captée par la caméra de rétrovision, un phénomène de vibration lié à la mauvaise fixation du hayon en position ouverte. En effet, dans un tel cas, l'image est susceptible de vibrer en même temps que le volet du hayon, ce qui peut être extrêmement désagréable pour le conducteur. On pourra alors prévoir que, sur détection d'un tel phénomène vibratoire, le système de rétrovision numérique arrête l'affichage des images captées par la caméra sur l'écran de rétrovision, et affiche à l'attention du conducteur un message relatif à la non disponibilité du système.

On pourra prévoir que le système de rétrovision numérique conforme à l'invention, et en particulier l'écran de rétrovision, soit compatible avec un miroir de rétrovision centrale classique. Ainsi, en prévoyant par exemple que l'écran de rétrovision soit intégré à un miroir de rétrovision, le conducteur pourra avoir le choix entre la rétrovision numérique et la rétrovision conventionnelle. Ainsi, en cas de non disponibilité du système de rétrovision numérique, le conducteur conservera la possibilité d'utiliser le miroir de rétrovision.

## Revendications

1. Procédé de rétrovision numérique pour un véhicule (2) automobile comportant un hayon (20) et une caméra de rétrovision (12) fixée au hayon, le procédé comportant les étapes suivantes :
- capter une image, ci-après image captée (120), d'une partie de l'environnement du véhicule au moyen de la caméra de rétrovision (12) ;
- restituer une portion de l'image captée, ci-après image restituée (122), sur un écran de rétrovision (14) ;
- effectuer une action corrective et/ou émettre un signal d'alerte si le hayon (20) est ouvert.

2. Procédé selon la revendication précédente, dans lequel l'action corrective consiste en une modification de la portion de l'image captée (120) qui est restituée.

3. Procédé selon la revendication précédente, dans lequel la modification de la portion de l'image captée (120) est réalisée par modification d'un angle d'inclinaison de l'image restituée (122), ou angle de « tilt ».

4. Procédé selon la revendication précédente, dans lequel la modification de l'angle d'inclinaison de l'image restituée (122) est réalisée en fonction de la position de l'horizon sur l'image restituée (122).

5. Procédé selon l'une des revendications précédentes, dans lequel le signal d'alerte est un signal lumineux et/ou un signal sonore et/ou un message d'alerte affiché sur l'écran de rétrovision (14).

6. Procédé selon la revendication précédente, dans lequel l'émission d'un signal d'alerte est couplée à l'arrêt de l'affichage de l'image restituée (122) sur l'écran de rétrovision (14).

7. Procédé selon l'une des revendications précédentes, comportant une étape de détection d'un phénomène vibratoire affectant l'image restituée (122), une action corrective telle que l'arrêt de l'affichage de l'image restituée (122) pouvant être réalisée si un phénomène vibratoire correspondant à une configuration dans laquelle le hayon (20) est ouvert est détecté.

8. Produit programme d'ordinateur comprenant des instructions qui, lorsque le programme est exécuté par un processeur, conduisent celui-ci à mettre en oeuvre les étapes du procédé selon l'une des revendications 1 à 7.

9. Système de rétrovision numérique (1) pour la mise en oeuvre d'un procédé conforme à l'une des revendications 1 à 7, le système de rétrovision comportant un calculateur de rétrovision (10), une caméra de rétrovision (12), un écran de rétrovision (14) et un capteur d'ouverture de coffre (16).

10. Véhicule (2) automobile mettant en oeuvre un procédé conforme à l'une des revendications 1 à 7 et/ou comportant un système de rétrovision numérique (1) conforme à la revendication 9.
